# EUROPÄISCHE PATENTANMELDUNG

(11) **EP 0 838 886 A2**
(43) Veröffentlichungstag der Anmeldung: **29.04.1998**
(21) Anmeldenummer: 97117081.6
(22) Anmeldetag: 02.10.1997
(51) Int. Cl.: H02G 3/12

(54) **Unterputzdose mit Verschlussdeckel und Verfahren zur Installation der Unterputzdose**

(30) Priorität: 10.10.1996 DE 19641852
(71) Anmelder: Finger, Peter, 84539 Ampfing (DE)
(72) Erfinder: Finger, Peter, 84539 Ampfing (DE)

(57) **Zusammenfassung**

Die Erfindung betrifft einen Verschlußdeckel für eine Unterputzdose, der an seinem Deckelboden mit einer Zentriereinrichtung für ein Bohrwerkzeug ausgebildet ist. Die Zentriereinrichtung besteht aus einem Trichter, der in eine Führungshülse zur Ausrichtung des Bohrwerkzeugs mündet. Die Dose hat an ihrem Dosenboden eine zylinderische Ausnehmung oder einen hohlzylindrischen Vorsprung zur Aufnahme der Führungshülse bei aufgesetzem Verschlußdeckel. Das erfindungsgemäße Installationsverfahren sieht vor, die überputzte Unterputzdose mit einem Kronenbohrer auszusägen, der sich durch die Zentriereinrichtung selbst zentriert und anschließend den Deckel mit einem Haken zu entfernen.

## Beschreibung

Die Erfindung betrifft einen Verschlußdeckel einer Unterputzdose gemäß dem Oberbegriff des Patentanspruchs 1, eine Unterputzdose gemäß dem Oberbegriff des Patentanspruchs 14 sowie ein Verfahren für das Installieren der erfindungsgemäßen Unterputzdose gemäß dem Patentanspruch 18.

Unterputzdosen werden in der Regel zeitlich vor dem Auftragen eines Putzes in entsprechende Wand- oder Deckenbohrungen eingesetzt und anschließend verputzt. Um ein Ausfüllen des Doseninnenraums mit dem Verputzmaterial zu verhindern, sind die Unterputzdosen mit abnehmbaren Dosendeckeln verschlossen.

Aus dem Stand der Technik sind Verschlußdeckel dieser Gattung sowie entsprechend geformte Unterputzdosen bekannt.Diese bekannte Unterputzdose besteht im wesentlichen aus einem zylinderförmigen Behälter, dessen eine Stirnseite durch einen einstückig mit der Zylinderwandung ausgebildeten Boden verschlossen ist. In der Zylinderwandung sowie im Boden sind mehrere Öffnungen im Radial- und ggf. im Axialabstand zueinander ausgebildet, die jeweils mit einem provisorisch befestigen, leicht entfernbaren Deckel verschlossen sind und somit eine nahezu beliebige Zuführung von Leitungen ermöglichen.

Die dem Boden gegenüberliegende offene Stirnseite der Unterputzdose ist gemäß dem Stand der Technik mittels eines Dosendeckels verschlossen, der abnehmbar in die Unterputzdose eingesetzt ist. Dieser Dosendeckel hat eine im wesentlichen becherförmige Gestalt bestehend aus einem kurzen Zylinderstück, das an einer Stirnseite durch einen Deckelboden verschlossen ist. An der gegenüberliegenden Stirnseite des Zylinderstücks ist ein radial nach Außen sich erstreckender Kragen oder Flansch ausgeformt, dessen Außenrand vorwiegend gezackt ist. Vom Boden ragen eine Anzahl von einstückig daran ausgebildeten, stiftförmigen Antennen in Richtung offener Stirnseite weit über das Zylinderstück vor. Diese Antennen sind auf einem Kreis in gleichem Winkelabstand zueinander angeordnet und markieren so die axiale Mitte des Dosendeckels. Der Deckel selbst besteht aus einem flexiblen Material, vorszugsweise ein Kunststoffmaterial und weist eine solche Wand- und Bodenstärke auf, die eine elastische Verformung des Deckels zuläßt.

Für die Installation der bekannten Unterputzdose beispielsweise in einer Gebäudewand wird diese in eine entsprechende, im Mauerwerk ausgeformte Ausnehmung eingesetzt, die vorhandenen Leitungen in die Dose verlegt und schließlich mittels des Dosendeckels verschlossen, wobei der Deckel soweit in die Unterputzdose eingedrückt wird, bis dessen Kragen an der offenen Stirnseite der Dose anschlägt.

Beim Verputzvorgang wird in der Regel das Verputzmaterial über die Unterputzdose gestrichen und damit vollständig von diesem verdeckt. Die vorragenden, aus dem elastischen Material des Deckels bestehenden Antennten sind jedoch von solcher Länge, daß sie aus dem aufgetragenen Putz vorstehen und damit ein Auffinden der Unterputzdose ermöglichen. Für das Öffnen der Dose wird nunmehr der Dosendeckel aufgrund seiner Eigenelastizität einfach in die Dose gedrückt oder geschlagen, wodurch der Putz im Randbereich der Dose aufbricht und somit der Dosendeckel samt anhaftendem Putz aus der Dose gezogen werden kann.

Es hat sich nunmehr gezeigt, daß sich bei den Unterputzdosen gemäß dem Stand der Technik während des Einschlagens des Deckels in die Dose keine exakten Abbruchkanten im Putz ergeben. Vielmehr bildet sich um die Dose ein willkürlich geformter Putzrand aus, der teilweise die Unterputzdose überlappt und an anderer Stelle weit in den Putz hineinreicht, soweit, daß er von einer nachfolgend aufgesetzen Dosenverblendung nicht mehr abgedeckt wird. Es ist daher notwendig, den Putzrand um die Unterputzdose manuell nachzuarbeiten, indem überstehender Putz mit geeigneten Schneid- oder Schleifwerzeugen abgetragen wird, wohingegen weit eingerissene Bereiche erneut Überputzt werden müssen.

Es liegt auf der Hand, daß derartige Nachbesserungen zeitaufwendig und damit teuer sind und nicht unbedingt zu einem ästhetisch befriedigendem Ergebnis führen.

Der Erfindung liegt daher die Aufgabe zugrunde eine Unterputzdose sowie einen Verschlußdeckel zu schaffen, deren Installation keine Nacharbeiten mehr erfordert. Eine weitere Aufgabe der Erfindung besteht ferner in der Bereitstellung eines neuartigen Verfahrens zur Installation der erfindungsgemäßen Unterputzdose.

Diese Aufgabe wird erfindungsgemäß durch einen Verschlußdeckel mit den Merkmalen des Patentanspruchs 1, durch eine Unterputzdose mit den Merkmalen des Patentanspruchs 14 sowie durch ein Verfahren mit den Verfahrensschritten gemäß dem Patentanspruch 18 gelöst.

Erfindungsgemäß hat der Verschlußdeckel für eine Unterputzdose demzufolge eine Zentriereinrichtung für das Zentrieren eines Werkzeugs vorzugsweise eines Stech- oder Bohrwerzeugs, die in der geometrischen Mitte des Verschlußdeckels angeordnet ist. Diese Zentriereinrichtung ermöglicht das erfindungsgemäße Installationsverfahren nach Anspruch 18, wonach vorzugsweise ein Kronenbohrer im wesentlichen mittig über der Unterputzdose auf dem vorab aufgetragenen Putz angesetzt werden kann. Beim Bohrvorgang wird die Bohrerspitze, welche nur ungefähr in der Mitte der Unterputzdose angesetzt werden muß, automatisch durch die Zentriereinrichtung axial zentriert, sodaß der Putz unmittelbar um die Unterputzdose konturenscharf und zentrisch ausgesägt werden kann.

Die Weiterbildung nach Anspruch 2 und 3 sieht vor, daß die Zentriereinrichtung als eine konkave Aushöhlung im Deckelboden ausgebildet ist, wobei die konkave Aushöhlung zu einem Führungabschnitt verlängert ist, der sich über eine vorbestimmte Strecke in die Unterputzdose erstreckt. Nach Anspruch 4 ist zudem vorgesehen, daß der Führungsabschnitt eine zylinderförmige Hülse ist, die an ihrer bezüglich der Unterputzdose innersten Stirnseite durch eine einstückig daran ausgebildete Kappe verschlossen ist. An ihrem bezüglich der Gebäudewand äußeren Endabschnitt hingegen ist die Hülse unter Ausbildung der Zentriereinrichtung bzw. der Aushöhlung trichterförmig zum Deckelboden hin aufgeweitet. Durch diese Maßnahmen wird zum Einen erreicht, daß der Bohrer während der Eindringphase axial innerhalb der Dose geführt wird und zum Anderen, daß die Eindringtiefe des Kronenbohrers entsprechend der axialen Lange des Führungsabschnitts exakt definiert ist. D.h. die Länge der Führungsabschnitts ist so gewählt, daß der Kronenbohrer den Putz unabhängig der Putzdicke lediglich bis zur äußeren Stirnseite der Unterputzdose einschneidet, sodaß ggf. ein nachträgliches erneutes Aufputzen vermieden wird.

Nach Anspruch 6 ist es ferner vorgesehen, daß die Führungshülse in ihrer Hülsenwandung eine Anzahl von Aussparrungen oder Öffnungen vorzugsweise in schlitzförmiger Ausführung hat. Mit diesen Öffnungen kann gemäß Anspruch 20 ein Hakenwerkzeug oder eine Federgabel in Eingriff gebracht werden, um den Deckel aus dem Putz herauszuziehen, ohne daß hierbei die durch den Kronenbohrer erzeugten Schnittkanten ausgebrochen werden.

Gemäß dem Patentanspruch 14 besteht die Unterputzdose aus einem zylinderförmigen Hohlkörper, der an einer Stirnseite mit dem Verschlußdeckel verschließbar ist und an einer gegenüberliegenden Stirnseite einen Dosenboden hat. Erfindungsgemäß hat die Unterputzdose ferner eine Lagerungseinrichtung zur radialen Lagerung und Stabilisierung des Führungsabschnitts des Verschlußdeckels. Diese Ausbildung der Unterputzdose hat den wesentlichen Vorteil, daß der Führungsabschnitt über den Dosenboden ausgesteift werden kann, um so eine exakte Führung des Kronenbohrers zu gewährleisten.

Vorzugsweise kann nach Anspruch 15 die Lagerungseinrichtung eine im wesentlichen zylinderförmige Vertiefung oder Aussparrung in der geometrischen Mitte des Dosenboden oder nach Anspruch 16 einfach eine mittig im Dosenboden ausgebildete Bohrung sein, deren Durchmesser jeweils im wesentlichen dem Außendurchmesser der Führungsabschnitts entsprechen. Hierdurch werden Biegekräfte, über den Kronenbohrer in den Führungsabschnitt eingeleitet, als Schubkräfte in den Dosenboden weitergeleitet, sodaß eine elastische oder plastische Verformung des Führungsabschnitts während des Bohrvorgangs verhindert wird.

Weitere vorteilhafte Ausgestaltungen der Erfindung sind Gegenstand der übrigen Unteransprüche.

Die Erfindung wird nachstehend anhand eines bevorzugten Ausführungsbeispiels unter Bezugnahme auf die begleitenden Zeichnungen näher erläutert.
Fig. 1 zeigt den Seitenriß eines Verschlußdeckels gemäß der Erfindung,
Fig. 2 zeigt die Draufsicht des Verschlußdeckels von Fig. 1,
Fig. 3 zeigt den Seitenriß des Verschlußdeckels und einer erfindungsgemäßen Unterputzdose in zusammengesetztem Zustand,
Fig. 4 zeigt die Draufsicht der Unterputzdose,
Fig. 5a und 5b zeigen jeweils die Seitenansicht der Unterputzdose mit eingesetztem Verschlußdeckel in zwei Varianten und
Fig. 6a und 6b zeigen den zwei erfindungswesentliche Verfahrensschritte zur Installation der Unterputzdose gemäß der Erfindung.

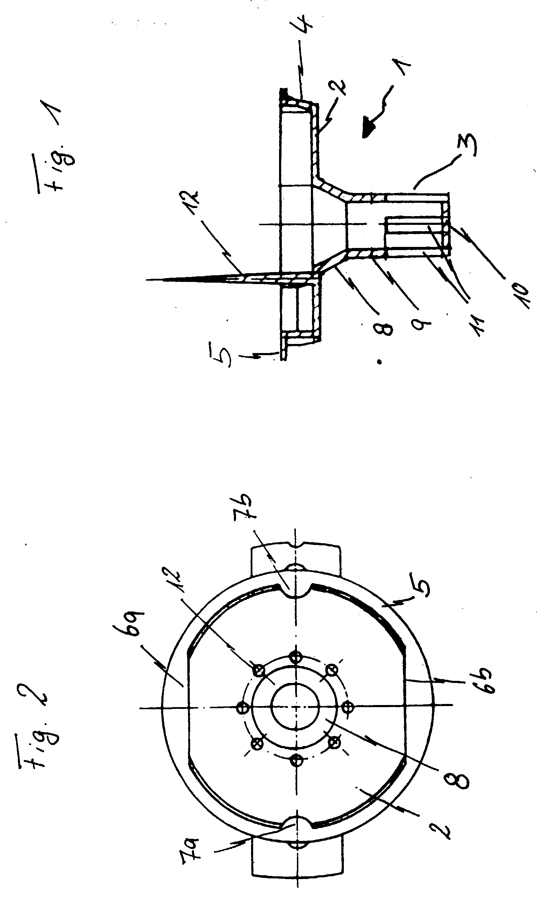

Gemäß der Fig. 1 hat der erfindungsgemäße Verschlußdeckel 1 für eine Unterputzdose einen Deckelboden 2, an dem eine Zentriereinrichtung 3 für ein Bohrwerkzeug ausgebildet ist.

Der Deckelboden 2 bildet vorliegend eine kreisrunde Platte, die an ihrem Außenumfang in einem stumpfen Winkel von ca. 75 bis 85 umgebördelt ist, wodurch ein konisch verlaufender kurzer Zylinderring 4 ausgebildet wird. Der freie Endabschnitt dieses Zylinderrings 4 ist wiederum radial nach außen abgebogen, sodaß ein kragenförmiger Anschlagsflansch 5 entsteht. Der konische Abschnitt kann dabei entweder über die gesamte Länge des Zylinderrings 4 verlaufen oder aber auf etwa der halben Länge in einen Zylinderabschnitt mit konstantem Querschnitt münden, wodurch eine exakte Führung und ein fester Sitz des Verschlußdeckels 1 in einer nachfolgend noch beschriebenen Unterputzdose gewährleistet wird.

Wie insbesondere aus der Fig. 2 entnommen werden kann, entspricht der Zylinderring 4 in seinem Querschnitt nicht genau einem Kreis, sondern ist an zwei diametrisch gegenüberliegenden Kreissegmenten über die gesamte Länge abgeflacht. Durch diese Abflachungen 6a, 6b erhält der kreisringförmige Flansch 5 an den entsprechenden Bereichen eine größere hinterseitige Fläche, die als Betätigungs- bzw. Griffflächen beim manuellen Entfernen des Deckels 1 von der Unterputzdose genutzt wird. Desweiteren sind an zwei ebenfalls diametrisch gegenüberliegenden Stellen, welche im 90 Winkel zu den Abflachungen 6a, 6b angeordnet sind, jeweils eine axiale, halbkreisförmige Einbuchtung 7a, 7b in dem Zylinderring 5 ausgeformt, die stirnseitig von Anschlagflansch 5 vollständig überragt bzw. abgedeckt werden.

Die Zentriereinrichtung 3 besteht gemäß der Fig. 1 aus einer trichter- oder kegelförmigen Ausbuchtung 8, die zentrisch im Deckelboden 2 einstückig mit diesem ausgeformt ist und sich entgegengesetzt zum Zylinderring 4 sowie mit Bezug auf ihre Mittelachse senkrecht zum Deckelboden 2 erstreckt. An ihrem freien und offenen Endabschnitt entfernt vom Deckelboden 2 mündet der Trichter 8 in einen axial zu diesem verlaufenden hülsenförmigen Führungsabschnitt 9 der wiederum an seiner freien Stirnseite mittels einer Endkappe 10 verschlossen ist. Die Führungshülse 9 hat eine Anzahl in gleichem Winkelabstand zueinander angeordneter Längsschlitze 11, die sich axial von der Endkappe 10 aus bis etwa zur Axialmitte der Führungshülse erstrecken.

Der Trichterrand ist ferner mit einer Anzahl gleichmäßig beabstandeter Sonden oder Antennen 12 besetzt (in Fig. 1 ist nur eine Antenne 12 dargestellt), die sich wie Nadeln oder Stifte senkrecht vom Deckelboden 2 aus in gleicher Richtung wie der Zylinderring 4 erstrecken und axial weit über diesen vorragen. Das Material des Verschlußdeckels 1 ist vorliegend ein Thermoplastkunststoff mit einer vorbestimmten Elastizität, der in einer Spritzgußform zu dem erfindungsgemäßen Verschlußdeckel 1 gepreßt wird. Die Wandstärke des Deckels 1 ist ferner in Abhängigkeit des verwendeten Material derart gewählt, daß die Führungshülse 9, der Deckelboden 2 zumindest im Bereich des Trichters 8 sowie der Trichter 8 selbst möglichst steif sind, um Biegekräfte ohne größere Deformationen aufnehmen zu können.

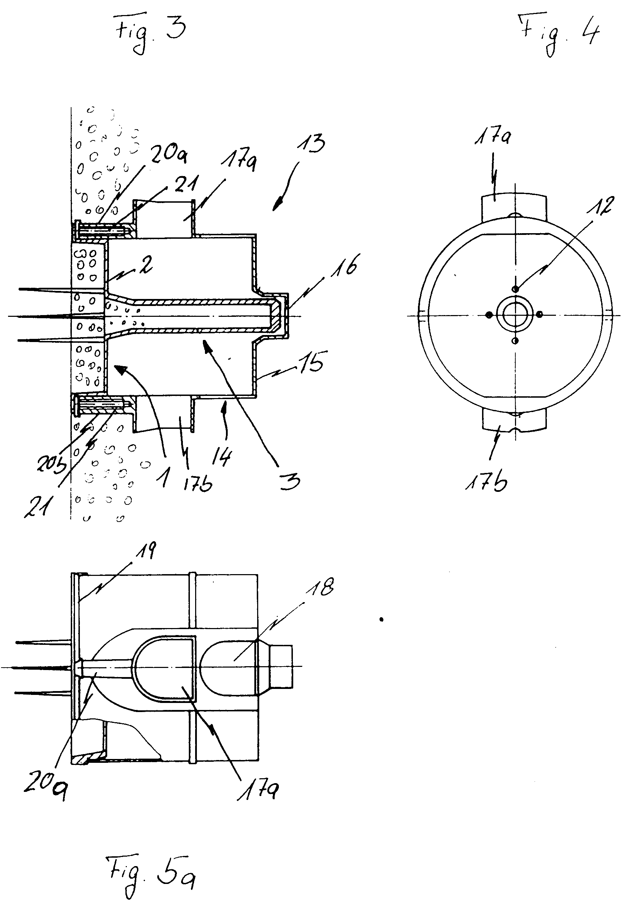

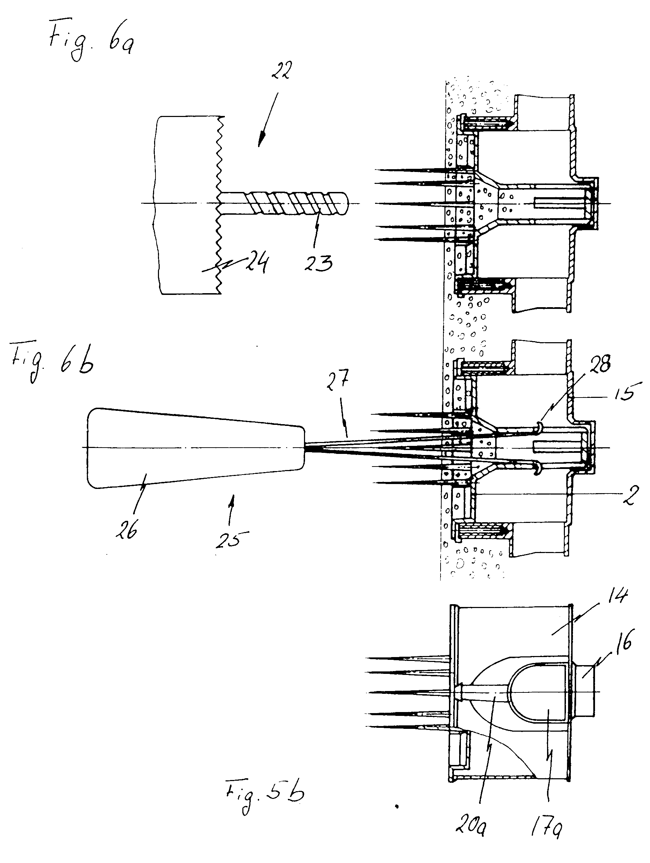

Anhand der Fig. 3 und 4 wird nunmehr die erfindungsgemäße Unterputzdose 13 beschrieben, in die bereits der Verschlußdeckel 1 gemäß vorstehend beschriebender Konstruktion stirnseitig eingesetzt ist.

Gemäß der Fig. 3 besteht die Unterputzdose 13 aus einem Hohlzylinder 14, der an seiner einen, dem Verschlußdeckel 1 gegenüberliegenden Stirnseite mit einem einstückig daran ausgeformten Dosenboden 15 verschlossen ist. Dieser Dosenboden 15 ist mittig mit einer zylindrischen Vertiefung oder Einsenkung 16 versehen, deren Innnendurchmesser im wesentlichen dem Außendurchmesser der Führungshülse 9 entspricht und diese aufnimmt, um sie in seitliche, d.h. in Radialrichtung zu fixieren. Der Übergangsbereich zwischen dem Dosenboden 15 und der Vertiefung 16 ist dabei gephast.

An zwei diametrisch gegenüberliegenden Stellen ist der Hohlzylinder 14 gemäß der Fig. 4 mit jeweils einem Anschlußstutzen 17a, 17b versehen, die zum Innenraum des Hohlzylinders 14 geöffnet sind und deren Querschnitte derart unterschiedlich sind, daß sie ineinandergeschoben werden könnten. Hierdurch besteht die Möglichkeit, zwei Unterputzdosen 13 miteinander mechanisch zu koppeln. Um ein sich Lösen einer derartigen Kopplung zu verhinden, ist der eine Anschlußstutzen 17a mit einer Rastnase und der andere Anschlußstutzen 17b mit einer entsprechend angeordneten Aussparrung versehen (beides nicht dargestellt).

Wie in der Fig. 5a gezeigt wird, hat die Unterputzdose 13 zusätzlich zu den hohlen Anschlußstutzen 17a, 17b zumindest im Bereich des Hohlzylinders 14 eine Anzahl von durch Perforation der Zylinderwand vorbereite Öffnungen 18, die je nach Bedarf ausgebrochen werden können, um Leitungen in die Dose zu verlegen. Eine Alternative hierzu ist in der Fig. 5b gezeigt, wonach diese Unterputzdose 13 lediglich mit den hohlen Anschlußstutzen 17a, 17b als Leitungszu- und Ausgänge auskommt, um so die axiale Länge der Dose zu verringern.

Gemäß der Fig. 3 ist der Hohlzylinder 14 an seiner offenen, durch den Verschlußdeckel 1 abdeckbaren Stirnseite zu einem schmalen Kragen 19 radial nach Außen abgebogen, um so eine ausreichende Auflagerfläche für den Anschlagsflansch 5 des Verschlußdeckels 1 zu bilden. An zwei diametrisch gegenüberliegenden Stellen bildet die Hohlzylinderwand zwei coaxial verlaufende Befestigungssockel 20a, 20b, in die jeweils ein Innengewinde 21 eingearbeitet ist. Die Anordnung und Form, dieser Befestigungssockel 20a, 20b entspricht dabei als "Positive" im wesenentlichen den beiden Ausbuchtungen7a, 7b im Verschlußdeckel als "Negative", sodaß der Verschlußdeckel 1 paßgenau in die Unterputzdose 13 eindrückbar ist.

Die Installation des erfindungsgemäßen Unterputzdose 13 mit Verschlußdeckel 1 erfolgt in der nachstehend ausgeführten Weise unter Bezugnahme auf die Fig. 6a und 6b.

Die erfindungsgemäße Unterputzdose 13 wird wie die herkömmliche Dose auch in eine ensprechende Ausnehmung, beispielsweise in einer Gebäudewand, Decke oder Boden eingesetzt und verkabelt. Wenn alle Stromleitungen in die Dose verlegt sind, wird die Dose 13 mittels des efindungsgemäßen Verschlußdeckels 1 verschlossen, der hierfür in die Dose 13 eingrückt wird. Durch den konischen Axialverlauf des Zylinderrings 4 des Verschlußdeckels 1 wird dieser paßgenau in der Dose 13 zentriert, sodaß der vom Deckelboden 2 in die Dose 13 vorragende freie Endabschnitt der Führungshülse 9 in die bodenseitige, zylinderförmige Ausnehmung 16 der Unterputzdose 13 eingeführt und darin radial abgestützt wird. Dieser Eindrückvorgang wird durch den deckelseitigen Anschlagflansch 5 begrenzt, der auf der offenen Stirnseite der Unterputzdose 13 in Anlage kommt, bevor die Endkappe 10 der Führungshülse 9 am Deckelboden 15 anschlägt. Somit ist in jedem Fall ein dichter Abschluß der Unterputzdose 13 gewährleistet ist.

Während des Verputzens der Wand- oder Deckenfäche wird Verputzmaterial auch über dem Verschlußdeckel 1 aufgetragen, wobei die Elastizität der vorragenden, mit dem Deckel 1 einstückig ausgebildeten Antennen 12 deren Abbrechen beim Auftragsvorgang verhindert. Die Länge dieser Antennen 12 ist dabei so gewählt, daß sie nach Trocken des Putzes aus diesem herausragen und somit die Position der Unterputzdose 13 anzeigen.

Um die Unterputzdose 13 zu Öffnen, wird in diesem Ausführungsbeispiel ein Kronenbohrer 22 etwa in der Mitte eines durch die Antennen 12 angedeuteten Kreises angesetzt und im wesentlichen senkrecht in den Putz getrieben. Selbst für den Fall, daß der Bohrer 23 nicht exakt mittig angesetzt oder schräg ausgerichtet wird, bewirkt die erfindungsgemäße Zentriereinrichtung 3 eine Zentrierung und senkrechte Ausrichtung des Bohrers 23 bei weiterem Eindringen in den Putz. Die Bohrerspitze wird nämlich durch den Trichter 8 auf die Mittelachse der Unterputzdose 13 abgelenkt, wobei die nachfolgende Führungshülse 9 den Bohrerschaft entsprechend ausrichtet. Die dabei auftretenden Radialkräfte werden zum Teil vom Verschlußdeckel 1 aufgenommen, der hierfür insbesondere im Bereich der Zentriereinrichtung wie vorstehend bereits erläutert wurde, besonders steif ausgeführt ist. Der übrige Teil der Radialkräfte wird über die Ausnehmung 16 im Dosenboden 15 in die Unterputzdose 13 weitergegeben, sodaß ein Verbiegen der Führungshülse 9 oder ein Kippen des Deckels 1 in der Dose 13 vermieden wird.

Die Eindringtiefe des Bohrers 23 wird durch die Lage der Endkappe 10 der Führungshülse 9 bestimmt, welche als Anschlag für den Bohrer 23 dient und so bemessen ist, daß, bei maximaler Eindringtiefe die Bohrerkrone 24 den Putz bis auf die Ebene des oberen Dosenrands 19 einschneidet. Der Durchmesser der Bohrerkrone 24 entspricht dabei im wesentlichen dem Durchmesser der Unterputzdose 13 oder ist geringfügig größer.

Anschließend wird der Kronenbohrer 22 wieder aus dem Putz herausgezogen und eine Art Federgabel 25 in das Bohrloch eingeführt. Diese Federgabel 25 besteht aus einem Handgriff 26, aus dem eine Anzahl von Stahlstäben 27 vorstehen, die an ihren Enden jeweils zu einem Haken 28 nach Außen umgebogen sind. Beim Einführen der Federgabel 25 in das Bohrloch schnappt zumindest ein Teil der Haken 28 durch die Elastizität der Stahlstäbe 27 in die Schlitze 11 der Führungshülse 9 ein, sodaß der Verschlußdeckel 1 zusammen mit dem daran anhaftenden ausgesägten Putz entfernt werden kann.

Es sei an dieser Stelle darauf hingewiesen, daß das vorstehend beschriebene Ausführungsbeispiel in unterschiedlicher Weise modifiziert werden kann.

So ist es möglich, den Verzchlußdeckel auch bei einer herkömmlichen Unterputzdose ohne bodenseitige Vertiefung zu verwenden, wobei in diesem Fall sämtliche Radialkräfte und Biegekräfte auf die Führungshülse 9 vom Deckelboden 2 aufgenommen werden müssen.

Auch kann an Stelle einer Vertiefung 16 ein Zylinderstück am Boden 15 der Unterputzdose 13 ausgebildet sein, das sich in Richtung zur Führungshülse 9 erstreckt und diese aufnimmt.

## Patentansprüche

1. Verschlußdeckel für eine Unterputzdose mit einem Deckelboden gekennzeichnet durch
eine Zentriereinrichtung für das Zentrieren eines Werkzeugs vorzugsweise eines Stech- oder Bohrwerzeugs, die in der geometrischen Mitte des Verschlußdeckels angeordnet ist.

2. Verschlußdeckel noch Anspruch 1, dadurch gekennzeichnet, daß
die Zentriereinrichtung eine konkave Aushöhlung im Deckelboden ist.

3. Verschlußdeckel nach Anspruch 2 dadurch gekennzeichnet, daß
die konkave Aushöhlung zu einem Führungabschnitt verlängert ist, der sich über eine vorbestimmte Strecke in die Unterputzdose erstreckt.

4. Verschlußdeckel nach Anspruch 3, dadurch gekennzeichnet, daß
der Führungsabschnitt eine zylinderförmige Hülse ist, die an ihrer bezüglich der Unterputzdose innersten Stirnseite durch eine einstückig daran ausgebildete Kappe verschlossen ist und an ihrem äußeren Endabschnitt unter Ausbildung der Zentriereinrichtung trichterförmig zum Deckelboden hin aufgeweitet ist.

5. Verschlußdeckel nach Anspruch 4 dadurch gekennzeichnet, daß
die Kappe als Eindringanschlag für das Werkzeug dient.

6. Verschlußdeckel nach einem der Ansprüche 5 oder 6, dadurch gekennzeichnet, daß
die Hülse in ihrer Hülsenwandung eine Anzahl von Aussparrungen oder Öffnungen hat.

7. Verschlußdeckel nach Anspruch 6, dadurch gekennzeichnet, daß
die Aussparrungen oder Öffnungen in gleichem Winkelabstand zueinander in einem axialen Mittenabschnitt der Hülse angeordnet sind.

8. Verschlußdeckel nach einem der Ansprüche 6 oder 7, dadurch gekennzeichnet, daß
die Öffnungen als axial Längsschlitze ausgebildet sind, die sich von der lichten Kante der Kappe aus axial bis zum Mittenabschnitt der Hülse erstrecken.

9. Verschlußdeckel nach einem der Ansprüche 3 bis 8, dadurch gekennzeichnet, daß
die konkave Aushölung sowie der Führungsabschnitt einstückig mit dem Deckelboden ausgebildet sind, wobei der Verschlußdeckel zumindest im Bereich der konkaven Aushölung und des Führungsabschnitts eine Wandstärke hat, die der gesamten Zentriereinrichtung eine vorbestimmte Steifigkeit gibt.

10. Verschlußdeckel nach Anspruch 9, dadurch gekennzeichnet, daß
die Wandstärke im Bereich der Zentriereinrichtung größer ist, als im Bereich des Deckelbodens, der elastisch verformbar ist.

11. Verschlußdeckel nach einem der vorstehenden Ansprüche, dadurch gekennzeichnet, daß
die Zentriereinrichtung von einer Anzahl von kreisförmig angeordneten, stiftförmigen Antennen umgeben ist, die sich im wesentlichen senkrecht zum Deckelboden erstrecken.

12. Verschlußdeckel nach einem der vorstehenden Ansprüche, dadurch gekennzeichnet, daß
der Deckelboden von einem im wesentlichen zylindrischen Ring umgeben ist, der sich in einer Richtung vom Deckelboden aus erstreckt und an einem gegegüberliegenden Ende von einem äußeren Kragen begrenzt ist.

13. Verschlußdeckel nach Anspruch 12, dadurch gekennzeichnet, daß
sich der zylindrische Ring von einem axialen Mittenabschnitt aus in Richtung Deckelboden konisch verjüngt.

14. Unterputzdose bestehend aus einem zylinderförmigen Hohlkörper, der an einer Stirnseite mit einem Verschlußdeckel gemäß einem der Ansprüche 3 bis 13 verschließbar ist und an einer gegenüberliegenden Stirnseite einen Dosenboden hat, gekennzeichnet durch
eine Lagerungseinrichtung zur radialen Lagerung und Stabilisierung zumindest des Führungsabschnitts des Verschlußdeckels.

15. Unterputzdose nach Anspruch 14, dadurch gekennzeichnet, daß
die Lagerungseinrichtung eine im wesentlichen zylinderförmige Vertiefung oder Aussparrung in der geometrischen Mitte des Dosenboden ist.

16. Unterputzdose nach Anspruch 14, dadurch gekennzeichnet, daß
die Lagerungseinrichtung eine mittig im Dosenboden ausgebildete Bohrung ist, deren Durchmesser im wesentlichen dem Außendurchmesser der Führungsabschnitts entspricht, der in montierem Zustand des Verschlußdeckels die Bohrung dichtend verschließt.

17. Unterputzdose nach Anspruch 14, dadurch gekennzeichnet, daß
die Lagerungseinrichtung eine Hülse ist, die sich zentrisch vom Dosenboden aus innerhalb der Unterputzdose erstreckt und den Führungsabschnitt aufnimmt.

18. Verfahren zur Installation einer Unterputzdose mit einem Verschlußdeckel gemäß einem der Ansprüche 1 bis 13, das die folgenden Verfahrensschritte vorsieht:
a. Einsetzen der Unterputzdose in eine Mauerwerksausnehmung,
b. Anschließen der Unterputzdose an externe Leitungen,
c. Überputzen der mit dem Verschlußdeckel dichtend verschlossenen Untezputzdose mit einem Verputzmaterial,
gekennzeichnet durch die Verfahrensschritte:
d. Ansetzen eines Kronenbohrers in etwa der durch die stiftförmigen Antennen bezeichneten Dosenmitte und Aufbohren des Putzes, wobei die Bohrerspitze durch die Zentriereinrichtung axial zur Unterputzdose geführt wird und
e. Einführen eines Hakenwerkzeugs in den Führungsabschnitt und Abziehen der Verschlußdeckels samt Verputzmaterial von der Unterputzdose.

19. Verfahren nach Anspruch 18, dadurch gekennzeichnet, daß
die Eindringtiefe des Kronenbohrers so gewählt wird, daß der Putz außenrandseitig der Unterputzdose zumindest bis zu deren oberer Stirnseite ausgesägt wird.

20. Verfahren nach Anspruch 18 oder 19, dadurch gekennzeichnet, daß
das Hakenwerzeug mit den schlitzförmigen Öffnungen im Führungsabschnitt in Eingriff gebracht wird.
